# EUROPÄISCHE PATENTANMELDUNG

(11) **EP 3 065 011 A1**
(43) Veröffentlichungstag der Anmeldung: **07.09.2016**
(21) Anmeldenummer: 16157881.0
(22) Anmeldetag: 29.02.2016
(51) Int. Cl.: G05B 19/042, G05B 9/02, F24H 9/20

(54) **SICHERHEITS-STEUEREINHEIT FÜR EIN ELEKTRISCHES GERÄT**

(30) Priorität: 03.03.2015 DE 102015203813
(71) Anmelder: BSH Hausgeräte GmbH, 81739 München (DE)
(72) Erfinder: Loser, Florian, 83022 Rosenheim (DE); Englisch, Christian, 83324 Ruhpolding (DE); Mayer, Gebhard, 83278 Traunstein (DE)

(57) **Zusammenfassung**

Es wird ein elektrisches Gerät (100) beschrieben, welches eine Funktionseinheit (101, 103, 123) zur Bereitstellung einer Gerätefunktion umfasst, wobei die Funktionseinheit (101, 103, 123) zur Bereitstellung der Gerätefunktion elektrische Leistung über eine Versorgungsleitung (107) aufnimmt. Außerdem umfasst das elektrische Gerät (100) einen oder mehrere Sensoren (104, 105, 106), die eingerichtet sind, ein Sensorsignal (141) zur Überwachung der durch die Funktionseinheit (101, 103, 123) bereitgestellten Gerätefunktion zu erfassen. Desweiteren umfasst das elektrische Gerät (100) einen Sicherheits-Schalter (108), der eingerichtet ist, die Funktionseinheit (101, 103, 123) von der Versorgungsleitung (107) zu trennen. Das Gerät (100) umfasst weiter ein Sicherheits-Modul (201) mit Sicherheits-Software, das eingerichtet ist, auf Basis des Sensorsignals (141) eine Fehlfunktion der Funktionseinheit (101, 103, 123) zu detektieren, und daraufhin zu veranlassen, dass die Funktionseinheit (101, 103, 123) durch den Sicherheits-Schalter (108) von der Versorgungsleitung (107) getrennt wird. Außerdem umfasst das Gerät (100) ein, von dem Sicherheits-Modul (201) getrenntes, Funktions-Modul (202) mit Funktions-Software, das eingerichtet ist, die durch die Funktionseinheit (101, 103, 123) bereitgestellte Gerätefunktion zu steuern.

## Beschreibung

Die Erfindung betrifft eine Steuereinheit für ein elektrisches Gerät, insbesondere für einen Durchlauferhitzer, zur Gewährleistung der Gerätesicherheit und zur Bereitstellung einer Gerätefunktion.

Elektrische Geräte können je nach Anwendung relativ große Mengen an elektrischer Energie aufnehmen. Beispielsweise kann der Heizblock eines elektrischen Durchlauferhitzers bis zu 30kW an elektrischer Leistung aufnehmen, um eine Flüssigkeit wie Wasser zu erwärmen. Durch die Aufnahme von größeren Mengen an elektrischer Energie kann es in einem Fehlerfall zu einer Erwärmung des elektrischen Geräts kommen. Beispielsweise kann der Heizblock eines Durchlauferhitzers überhitzen, wenn der Heizblock mit elektrischer Energie versorgt wird, obwohl keine Flüssigkeit durch den Heizblock fließt. Um eine solche Erwärmung im Fehlerfall zu unterbinden, umfassen elektrische Geräte meist einen Sicherheit-Schalter, der die Aufnahme von elektrischer Energie durch ein elektrisches Gerät im Fehlerfall unterbindet.

Elektrische Geräte können eine Vielzahl von unterschiedlichen Funktionen aufweisen, die durch einen Controller (z.B. einen Mikrocontroller) gesteuert werden können. Beispielsweise können für einen Durchlauferhitzer unterschiedliche Erwärmungsprofile, Regelalgorithmen und/oder unterschiedliche Nutzerschnittstellen bereitgestellt werden. Es ist wünschenswert, dass derartige Funktionen in effizienter Weise weiterentwickelt und/oder an geänderte Randbedingungen angepasst werden können. Bei der Anpassung von Funktionen des elektrischen Geräts muss dabei weiterhin gewährleistet sein, dass die Aufnahme von elektrischer Energie im Fehlerfall zuverlässig unterbunden wird.

Das vorliegende Dokument befasst sich mit der technischen Aufgabe, eine Steuereinheit für ein elektrisches Gerät bereitzustellen, die die Aufnahme von elektrischer Energie in einem Fehlerfall zuverlässig unterbindet, und durch die eine flexible und Kosten-effiziente Anpassung bzw. Weiterentwicklung von Funktionen des elektrischen Geräts ermöglicht wird.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein elektrisches Gerät, z.B. ein Durchlauferhitzer, beschrieben. Das elektrische Gerät umfasst eine Funktionseinheit zur Bereitstellung einer Gerätefunktion des elektrischen Gerätes. Beispielsweise kann durch die Funktionseinheit die Erwärmung eines Mediums (z.B. einer Flüssigkeit oder eines Gases) bewirkt werden. Die Funktionseinheit nimmt zur Bereitstellung der Gerätefunktion elektrische Leistung über eine Versorgungsleitung auf, z.B. um einen Heizkörper bzw. einen Heizwiderstand zu erwärmen. Desweiteren kann die Funktionseinheit einen Kanal zur Aufnahme eines flüssigen und/oder gasförmigen Mediums umfassen, wobei der Kanal eingerichtet ist, das Medium an dem Heizwiderstand bzw. an dem Heizkörper vorbeizuführen

Das elektrische Gerät umfasst weiter ein oder mehrere Sensoren, die eingerichtet sind, ein Sensorsignal zur Überwachung der durch die Funktionseinheit bereitgestellten Gerätefunktion zu erfassen. Die ein oder mehreren Sensoren können z.B. einen Temperatur-Sensor umfassen und das Sensorsignal kann Temperaturdaten von dem Temperatur-Sensor umfassen. Alternativ oder ergänzend können die ein oder mehreren Sensoren einen Durchfluss-Sensor umfassen, der eingerichtet ist, eine Menge eines Mediums zu erfassen, die an einen Heizwiderstand der Funktionseinheit vorbeigeführt wird. Das Sensorsignal kann dann Mengendaten von dem Durchfluss-Sensor umfassen.

Das elektrische Gerät umfasst weiter einen Sicherheits-Schalter (z.B. ein Relais), der eingerichtet ist, die Funktionseinheit von der Versorgungsleitung zu trennen. Die Funktionseinheit kann eingerichtet sein, zur Bereitstellung der Gerätefunktion eine Menge an elektrischer Energie über die Versorgungsleitung aufzunehmen, durch die, bei Vorliegen einer Fehlfunktion, die Funktionseinheit zerstört werden kann. Der Sicherheits-Schalter kann zu diesem Zweck bei Detektion einer Fehlfunktion angesteuert werden, um eine Zerstörung der Funktionseinheit zu verhindern.

Desweiteren umfasst das elektrische Gerät ein Sicherheits-Modul mit Sicherheits-Software, wobei das Sicherheits-Modul eingerichtet ist, auf Basis des Sensorsignals eine Fehlfunktion der Funktionseinheit zu detektieren, und daraufhin zu veranlassen, dass die Funktionseinheit durch den Sicherheits-Schalter von der Versorgungsleitung getrennt wird. Das Sicherheits-Modul kann in Bezug auf die Bereitstellung der Gerätefunktion darauf beschränkt sein, eine Fehlfunktion der Funktionseinheit zu detektieren, und zu veranlassen, dass daraufhin eine Energieversorgung der Funktionseinheit über die Versorgungsleitung unterbunden wird.

Außerdem umfasst das elektrische Gerät ein, von dem Sicherheits-Modul getrenntes, Funktions-Modul mit Funktions-Software, wobei das Funktions-Modul eingerichtet ist, die durch die Funktionseinheit bereitgestellte Gerätefunktion zu steuern.

Die Steuerung des elektrischen Geräts erfolgt somit durch eine Steuereinheit, welche ein Sicherheit-Modul und ein davon getrenntes Funktions-Modul umfasst. Durch die Bereitstellung eines Sicherheits-Moduls wird eine zuverlässige Sicherung des elektrischen Geräts bei einer Fehlfunktion gewährleistet, und durch die Bereitstellung eines Funktions-Moduls wird eine flexible Anpassung der Gerätefunktion ermöglicht. Desweiteren wird durch eine Trennung von Sicherheits-Modul und Funktions-Modul erreicht, dass Anpassungen der Gerätefunktion keinen Einfluss auf die Sicherheit des elektrischen Geräts haben, und somit nicht durch eine Prüfinstitution abgenommen werden müssen. So kann der Aufwand für die Anpassung der Gerätefunktion reduziert werden.

Die Sicherheits-Software des Sicherheits-Moduls kann auf einem ersten Prozessor implementiert sein und die Funktions-Software des Funktions-Moduls kann auf einem zweiten Prozessor implementiert ist, wobei der erste Prozessor und der zweite Prozessor voneinander getrennt sind. Insbesondere kann das Sicherheits-Modul als Sicherheits-Software auf einem ersten Prozessor implementiert sein, und das Funktions-Modul kann als Funktions-Software auf einem zweiten Prozessor implementiert sein. Durch die Verwendung von getrennten Prozessoren wird eine gegenseitige Beeinflussung von Sicherheits-Aspekten und Funktions-Aspekten weiter unterbunden.

Die Funktionseinheit kann ein Steuerelement umfassen, durch das ein Strom, der von der Versorgungsleitung in die Funktionseinheit (z.B. durch einen Heizwiderstand) fließt, in N unterschiedlichen Stufen, mit N>2, eingestellt werden kann. Das Steuerelement kann ein Halbleiter-Bauelement, insbesondere einen Triac (Triode for Alternating Current), umfassen. Das Funktions-Modul kann eingerichtet sein, ein Steuersignal zur Ansteuerung des Steuerelements zu generieren. Insbesondere kann das Funktions-Modul eine Stufe ermitteln, und veranlassen, dass durch das Steuerelement ein Strom gemäß der ermittelten Stufe bewirkt wird. Durch die Einstellung von unterschiedlichen Stufen kann die Menge an elektrischer Energie angepasst werden, die von der Funktionseinheit aufgenommen wird.

Das Funktions-Modul kann eingerichtet sein, den Strom durch das Steuerelement in Abhängigkeit von dem Sensorsignal zu steuern. Beispielsweise kann der Strom derart gesteuert bzw. geregelt werden, dass die Temperatur eines durch einen Heizwiderstand erwärmten Mediums eine bestimmte Soll-Temperatur aufweist. Ein dafür erforderlicher Regelalgorithmus kann durch das Funktions-Modul und insbesondere durch die Funktions-Software implementiert werden.

Das Funktions-Modul kann eingerichtet sein, das Steuersignal zur Ansteuerung des Steuerelements dem Sicherheits-Modul bereitzustellen. Das Sicherheits-Modul kann dann eingerichtet sein, auch auf Basis von dem Steuersignal zu detektieren, ob eine Fehlfunktion von der Funktionseinheit vorliegt. Auf Basis von dem Steuersignal kann insbesondere ermittelt werden, welche elektrische Leistung bzw. Energei von der Funktionseinheit aufgenommen wird. Anhand des Sensorsignals kann ermittelt werden, ob die Funktionseinheit durch die aufgenommene elektrische Leistung zerstört werden könnte, und es kann daraufhin veranlasst werden, dass der Sicherheits-Schalter die Verbindung zwischen Versorgungsleitung und Funktionseinheit trennt.

Das elektrische Gerät kann Freigabe-Mittel umfassen (z.B. ein oder mehrere Halbleiter-Schalter), um eine Steuerung des Steuerelements durch das Steuersignal zu ermöglichen bzw. zu unterbinden. Das Sicherheits-Modul kann eingerichtet sein, die Freigabe-Mittel zu veranlassen, eine Steuerung des Steuerelements durch das Steuersignal zu unterbinden, wenn eine Fehlfunktion der Funktionseinheit detektiert wurde. So kann die Sicherheit des elektrischen Geräts weiter erhöht werden, da sowohl durch den Sicherheits-Schalter als auch durch das Steuerelement eine Verbindung zwischen Versorgungsleitung und Funktionseinheit unterbrochen werden kann. Dabei kann der Sicherheits-Schalter eingerichtet sein, den Strom, der von der Versorgungsleitung über das Steuerelement in die Funktionseinheit fließt, galvanisch zu unterbrechen (z.B. durch eine mechanische Auftrennung der Verbindung zwischen Versorgungsleitung und Funktionseinheit).

Das elektrische Gerät kann einen Stromsensor (z.B. einen Optokoppler) umfassen, der eingerichtet ist, einen Indikator für den Strom durch das Steuerelement zu erfassen. Das Sicherheits-Modul kann eingerichtet sein, eine Fehlfunktion der Funktionseinheit auch auf Basis von dem Indikator zu detektieren. Insbesondere können so Abweichungen zwischen einem über das Steuersignal eingestellten Strom und einem tatsächlichen Strom detektiert werden, und es kann daraufhin ggf. eine Unterbrechung der Verbindung zwischen Versorgungsleitung und Funktionseinheit bewirkt werden.

Die Versorgungsleitung kann eine Vielzahl von Teilleitungen für Phasen eines Dreiphasenwechselstroms umfassen und die Funktionseinheit kann eine Vielzahl von Steuerelementen für die Vielzahl von Teilleitungen umfassen. Desweiteren kann der Sicherheits-Schalter eingerichtet sein, die Vielzahl von Steuerelementen von der Vielzahl von Teilleitungen galvanisch zu trennen.

Gemäß einem weiteren Aspekt wird eine Steuereinheit für ein elektrisches Gerät beschrieben. Das elektrische Gerät umfasst eine Funktionseinheit zur Bereitstellung einer Gerätefunktion, wobei die Funktionseinheit zur Bereitstellung der Gerätefunktion elektrische Leistung über eine Versorgungsleitung aufnimmt. Außerdem umfasst das elektrische Gerät ein oder mehrere Sensoren, die eingerichtet sind, ein Sensorsignal zur Überwachung der durch die Funktionseinheit bereitgestellten Gerätefunktion zu erfassen. Desweiteren umfasst das elektrische Gerät einen Sicherheits-Schalter, der eingerichtet ist, die Funktionseinheit von der Versorgungsleitung zu trennen.

Die Steuereinheit umfasst ein Sicherheits-Modul mit Sicherheits-Software, das eingerichtet ist, auf Basis des Sensorsignals eine Fehlfunktion der Funktionseinheit zu detektieren, und daraufhin zu veranlassen, dass die Funktionseinheit durch den Sicherheits-Schalter von der Versorgungsleitung getrennt wird. Außerdem umfasst die Steuereinheit ein, von dem Sicherheits-Modul getrenntes, Funktions-Modul mit Funktions-Software, das eingerichtet ist, die durch die Funktionseinheit bereitgestellte Gerätefunktion zu steuern.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
- Figur 1: einen Durchlauferhitzer als Beispiel für ein elektrisches Gerät; und
- Figur 2: eine beispielhafte Steuereinheit für ein elektrisches Geräts mit zwei getrennten Modulen.

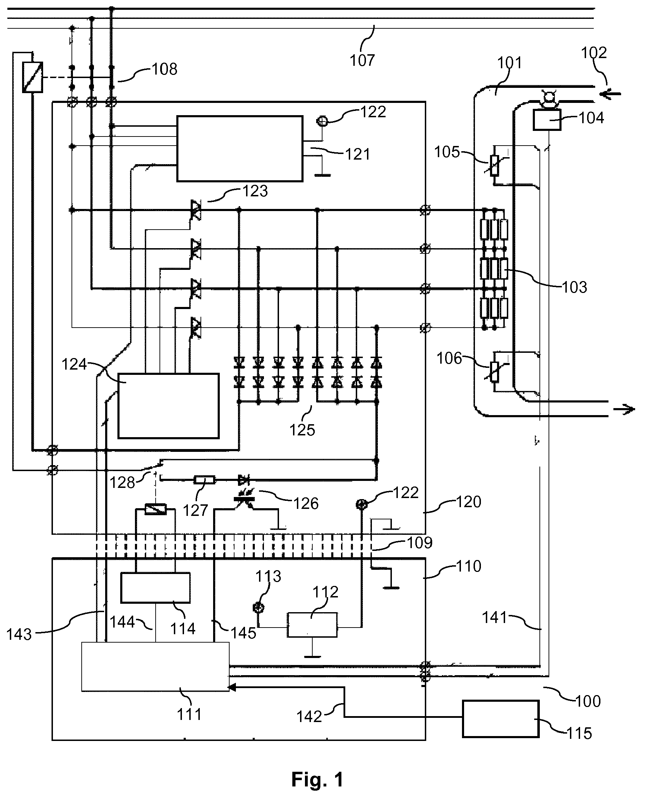

Fig. 1 zeigt beispielhafte Komponenten eines Durchlauferhitzers 100 als Beispiel für ein elektrisches Geräts 100, das signifikante Mengen an elektrischer Energie aufnehmen kann. Der Durchlauferhitzer 100 wird über eine Versorgungsleitung 107 (z.B. über eine Drei-Phasen Wechselstromleitung) mit elektrischer Energie versorgt. Desweiteren umfasst der Durchlauferhitzer 100 einen Sicherheits-Begrenzer 108 (in diesem Dokument auch als Sicherheits-Schalter bezeichnet), der eingerichtet ist, den Durchlauferhitzer 100 von der Versorgungsleitung 107 zu trennen.

In dem dargestellten Beispiel umfasst der Durchlauferhitzer 100 einen Kanal 101, durch den eine Flüssigkeit 102 (z.B. Wasser) in Richtung der angezeigten Pfeile fließt. Die Flüssigkeit 102 wird in dem Kanal 101 durch Heizwiderstände 103 erwärmt. Die Heizwiderstände 103 werden durch eine Energieversorgungs-Schaltung 120 (die z.B. auf einer Energieversorgungs-Karte angeordnet ist) mit elektrischer Energie versorgt. Die Energieversorgungs-Schaltung 120 wird durch eine Steuer-Schaltung 110 (die z.B. auf einer Steuer-Karte angeordnet ist) gesteuert.

Die Energieversorgungs-Schaltung 120 umfasst ein oder mehrere Steuerelemente 123 (z.B. Triacs), die eingerichtet sind, die Heizwiderstände 103 mit der Versorgungsleitung 107 zu verbinden und den Stromfluss durch die Heizwiderstände 103 zu steuern. Die ein oder mehreren Steuerelemente 123 können über einen Treiber 124 angesteuert werden. Desweiteren umfasst die Energieversorgungs-Schaltung 120 einen Spannungswandler 121 (z.B. einen AC/DC-Wandler), der eingerichtet ist, eine Gleichspannung (z.B. bei 12V) für den Betrieb der Steuerelemente 123 zu generieren.

Außerdem umfasst die Energieversorgungs-Schaltung 120 eine Dioden-Matrix 125, die eingerichtet ist, Vergleichs-Potentiale für eine Ansteuerung (z.B. für eine Ansteuer-Spule) des Sicherheits-Begrenzers 108 zu generieren. Je nach Stellung eines Schalt-Relais 128 kann dann der Sicherheits-Begrenzer 108 ausgelöst werden, um die Versorgungs-Schaltung 120 von der Versorgungsleitung 107 zu trennen. In der in Fig. 1 dargestellten Ruhe-Stellung des Schalt-Relais 128 wird der Sicherheits-Begrenzer 108 geöffnet, da an den Dioden der Dioden-Matrix 125 die gleiche Spannung anliegt.

Andererseits kann das Schalt-Relais 128 in eine zweite Stellung gebracht werden, bei dem ein Teil der Dioden-Matrix 125 über einen Widerstand 127 geführt wird. Der Widerstand 127 ist so groß, dass sich an der Ansteuerung des Sicherheits-Begrenzers 108 ein substantieller Spannungsabfall ergibt, durch den der Sicherheits-Begrenzer 108 geschlossen wird, und somit einen Verbindung zwischen den Versorgungsleitungen 107 und den Steuerelement 123 vorliegt.

Die Steuer-Schaltung 110 umfasst eine Steuereinheit 111, welche z.B. mindestens einen Mikroprozessor umfasst, und die eingerichtet ist, Steuersignale 143 für den Treiber 124 der ein oder mehreren Steuerelemente 123 und Steuersignale 144 für einen Treiber 114 des Schalt-Relais 128 zu generieren. Desweiteren umfasst die Steuer-Schaltung 110 einen Wandler 112 (z.B. einen DC/DC-Wandler), der eingerichtet ist, eine weitere Gleichspannung 113 (z.B. von 5V) für die Versorgung der Steuereinheit 111 bereitzustellen. Die Steuer-Schaltung 110 kann über ein Kabel 109 mit der Energieversorgungs-Schaltung 120 verbunden sein.

Die Steuereinheit 111 kann die Steuersignale 143, 144 in Abhängigkeit von ein oder mehreren Sensorsignale 141, 145 und/oder in Abhängigkeit von ein oder mehreren Eingabesignalen 142 generieren. Insbesondere kann der Durchlauferhitzer 100 einen Durchfluss-Sensor 104 umfassen, der eingerichtet ist, eine Flussmenge an Flüssigkeit 102 zu ermitteln, die durch den Kanal 101 fließt. Desweiteren kann der Durchlauferhitzer 100 Temperatur-Sensoren 105, 106 umfassen, die eingerichtet sind, die Temperatur der Flüssigkeit 102 flussaufwärts bzw. flussabwärts von den Heizwiderständen 103 zu erfassen. Außerdem kann der Durchlauferhitzer 100 einen Optokoppler 126 umfassen, der einen Indikator 145 für den Strom durch die Steuerelemente 123 bereitstellt. Desweiteren kann der Durchlauferhitzer 100 eine Eingabeeinheit 115 (z.B. einen Drehknopf oder ein Touchscreen) umfassen, die es einem Nutzer ermöglicht, eine Eingabe zu tätigen (z.B. um einen Wunschtemperatur für die Flüssigkeit 102 festzulegen). Die von einem Nutzer getätigte Eingabe kann als Eingabesignal 142 der Steuereinheit 111 übermittelt werden.

Wie eingangs dargelegt, befasst sich das vorliegende Dokument mit der Bereitstellung von einer SW (Software) - basierten Steuereinheit 111 für ein elektrisches Gerät 100, durch die die Aufnahme von elektrischer Energie in einem Fehlerfall zuverlässig unterbunden wird. Ein solcher Fehlerfall liegt z.B. vor, wenn für eine bestimmte Heizleistung der Heizwiderstände 103 keine ausreichende Menge an Flüssigkeit 102 durch den Kanal 101 fließt. Eine solche Situation kann z.B. auf Basis von den Sensorsignalen 141 der Temperatur-Sensoren 105, 106 und des Durchfluss-Sensors 104 detektiert werden. Die Steuereinheit 111 kann daraufhin mittels des Steuersignals 114 den Relais-Treiber 114 veranlassen, das Relais 128 in die (obere) Stellung zu bringen, in der der Sicherheits-Begrenzer 108 bei Stromfluss durch die Steuerelemente 123 auslöst. Das heißt, die Steuereinheit 111 kann ein Software-Programm umfassen, das eingerichtet ist, den Fehlerfall auf Basis von den Sensorsignalen 141 zu erkennen und daraufhin ein erforderliches Steuersignal 114 für das Relais 128 zu erzeugen.

Für Software-Programme, die dazu verwendet werden, die Sicherheit eines elektrischen Geräts 100 zu gewährleisten, gelten typischerweise hohe Anforderungen in Bezug auf die Entwicklung, auf das Testen und auf die Abnahme durch eine Prüfinstitution (z.B. in Deutschland durch den VDE (Verband der Elektrotechnik)). Die Anforderungen sind meist in Normen, z.B. in der Norm DIN EN 60335-1, spezifiziert. Andererseits gelten diese Anforderungen meist nicht für Software-Programme, die eine bestimmte Gerätefunktion eines elektrischen Geräts 100 bereitstellen, und die keinen direkten Einfluss auf die Sicherheit des elektrischen Geräts 100 haben. Derartige unkritische Funktionen können z.B. einen Regelalgorithmus oder eine Nutzerschnittstelle des elektrischen Geräts 100 umfassen.

Im Laufe des Produktzyklus eines elektrischen Geräts 100 kommt es typischerweise regelmäßig zu Modifikationen der Software des elektrischen Geräts 100. Beispielsweise werden Funktionen und/oder die Performance des elektrischen Gerätes 100 optimiert bzw. es werden Software-Fehler korrigiert. Bei Verwendung einer Steuereinheit 111 mit einer Software, welche sowohl Sicherheits-Aspekte als auch Funktions-Aspekte abdeckt, unterliegen derartige Modifikationen der Software den strengen Anforderungen an Sicherheits-Software und erzeugen damit Kosten und einen erhöhten Approbationsaufwand für das elektrische Gerät 100. Außerdem erhöht sich durch die strengen Anforderungen an Sicherheits-Software der Entwicklungszeitraum, da eine neue Software erst in das Gerät 100 einfließen kann, wenn eine Abnahme durch eine Prüfinstitution erfolgt ist.

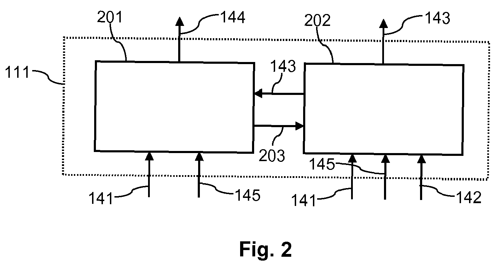

Um den Approbationsaufwand für die Sicherheits-Software so gering wie möglich zu halten und um bei funktionalen Softwareänderungen Einflüsse der Änderungen auf die Sicherheit eines Gerätes 100 ausschließen zu können, ist es sinnvoll, die Sicherheits-Software klar von funktionalen Softwareanteilen, d.h. von einer Funktions-Software, zu trennen. Eine solche Trennung ist in Fig. 2 dargestellt. Insbesondere zeigt Fig. 2 eine Steuereinheit 111 für den Durchlauferhitzer 100 aus Fig. 1 mit einem ersten Steuermodul 201, welches auch als Sicherheits-Modul bezeichnet wird, und mit einem zweiten Steuermodul 202, welches auch als Funktions-Modul bezeichnet wird. Das Sicherheits-Modul 201 umfasst Sicherheits-Software und ist eingerichtet, das Steuersignal 144 zur Ansteuerung des Schalt-Relais 128 zu generieren. Zu diesem Zweck kann das Sicherheits-Modul 201 die Sensorsignale 141, 145 ermitteln. Desweiteren kann das Sicherheits-Modul 201 das Steuersignal 143 von dem Funktions-Modul 202 empfangen, welches anzeigt, wie die Steuerelemente 123 anzusteuern sind, d.h. mit welcher Heizstufe die Heizwiderstände 103 gezeigt werden sollen. Auf Basis dieser Informationen kann das Sicherheits-Modul 201 autark das Vorliegen eines Fehlerfalls detektieren und bei Bedarf veranlassen, dass der Sicherheits-Begrenzer 108 ausgelöst wird (durch entsprechende Ansteuerung des Schalt-Relais 128).

Andererseits sind das Funktions-Modul 202 und die Funktions-Software eingerichtet, das Steuersignal 143 für die Steuerelemente 123 in Abhängigkeit von Sensorsignalen 141, 145 und/oder Eingabesignalen 142 zu ermitteln. Dabei kann die Funktionsweise des Durchlauferhitzers 100 durch die Funktions-Software des Funktions-Moduls 202 angepasst werden. Insbesondere kann angepasst werden, unter welchen Bedingungen eine bestimmte Heizstufe (anhand des Steuersignals 143) durch das Funktions-Modul 202 ausgelöst wird.

Das Sicherheits-Modul (bzw. die Sicherheits-Software) 201 und das Funktions-Modul (bzw. die Funktion-Software) 202 können auf separaten Prozessoren implementiert sein, um eine eindeutige Trennung von Sicherheitsanteilen und Funktionsanteilen zu gewährleisten. Dabei übernimmt der Prozessor des Sicherheits-Moduls 201 einzig und allein die Gerätesicherheit. Alle funktionalen Umfänge eines elektrischen Geräts 100 sind auf dem Prozessor des Funktions-Moduls 202 untergebracht. Die beiden Prozessoren können über eine Datenbusverbindung miteinander kommunizieren, um zum Beispiel Diagnoseinformationen 203 auszutauschen.

Das PEC (protective electrical circuit) Schalt-Relais 128 wird anhand von dem Steuersignal 144 über das Sicherheits-Modul 201 angesteuert. Dieses Relais 128 ist ein monostabiler Schalter, der in Ruhelage (d.h. wenn das Relais 128 nicht bestromt ist) die Ausgänge der Steuerelemente 123 über eine Dioden-Matrix 125 mit der Ansteuerung des Sicherheits-Begrenzers 108 verbindet. Im Fehlerfall, z.B. wenn ein Steuerelement 123 ungewollt leitet, wird so der Sicherheits-Begrenzer 108 ausgelöst. Im angesteuerten Zustand des Relais 128 wird der Strom zur Ansteuerung des Sicherheits-Begrenzers 108 anhand von ein oder mehreren Widerständen 127 (z.B. 400 kf2) derart begrenzt, dass der Sicherheits-Begrenzer nicht mehr auslösen kann. Außerdem können über einen Optokoppler 126 die Schaltmuster der Steuerelemente 123 überwacht werden.

Desweiteren kann das Sicherheits-Modul 201 ein Steuersignal generieren, durch dass die Ansteuerung der Strom-Schalter 123 durch den Treiber 124 unterbunden wird (nicht dargestellt). Die Treiber 124 für die einzelnen Strom-Schalter 123 können über Halbleiter-Schalter von den Steuerelementen 123 getrennt werden. Diese Trennung kann von dem Sicherheits-Modul 201 bei Vorliegen von einem Fehlerfall vorgenommen werden. Alternativ kann für die Ansteuerung der Steuerelemente 123 durch den Treiber 124 eine Freigabe erforderlich sein, welche nur durch das Sicherheits-Modul 201 erteilt werden kann. Ohne diese Freigabe können dann die Steuerelemente 123 nicht durchschalten. So wird verhindert, dass die Heizung einschaltet werden kann, wenn keine Flüssigkeit 102 fließt.

Die Trennung von Sicherheits-Modul 201 (d.h. von Sicherheits-Software) und Funktions-Modul 202 (d.h. von Funktions-Software) ermöglicht es, Sicherheits-Software bereitzustellen, die nur einmal approbiert wird und anschließend als eigenständiges Modul 201 im Produktzyklus eines elektrischen Geräts 100 unangetastet bleibt. Änderungen an der funktionalen Software im Funktions-Modul 202 sind dann nicht mehr sicherheitsrelevant und können zeitnah und mit reduziertem Aufwand bereitgestellt werden. Außerdem wird der Aufwand für die Approbation der Sicherheits-Software reduziert, da Quereffekte mit der Funktions-Software im Vorfeld ausgeschlossen werden können. Desweiteren kann die Sicherheits-Software bzw. ein Sicherheits-Prozessor als approbiertes Modul ggf. auch in anderen elektrischen Geräten eingesetzt werden, ohne dass dafür eine erneute Approbation erforderlich ist. Es kann somit in Kosten-effizienter Weise die Sicherheit eines elektrischen Geräts 100 gewährleistet werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Elektrisches Gerät (100), welches umfasst
- eine Funktionseinheit (101, 103, 123) zur Bereitstellung einer Gerätefunktion des elektrischen Gerätes (100), wobei die Funktionseinheit (101, 103, 123) zur Bereitstellung der Gerätefunktion elektrische Leistung über eine Versorgungsleitung (107) aufnimmt;
- ein oder mehrere Sensoren (104, 105, 106), die eingerichtet sind, ein Sensorsignal (141) zur Überwachung der durch die Funktionseinheit (101, 103, 123) bereitgestellten Gerätefunktion zu erfassen;
- einen Sicherheits-Schalter (108), der eingerichtet ist, die Funktionseinheit (101, 103, 123) von der Versorgungsleitung (107) zu trennen;
- ein Sicherheits-Modul (201) mit Sicherheits-Software, das eingerichtet ist, auf Basis des Sensorsignals (141) eine Fehlfunktion der Funktionseinheit (101, 103, 123) zu detektieren, und daraufhin zu veranlassen, dass die Funktionseinheit (101, 103, 123) durch den Sicherheits-Schalter (108) von der Versorgungsleitung (107) getrennt wird; und
- ein, von dem Sicherheits-Modul (141) getrenntes, Funktions-Modul (202) mit Funktions-Software, das eingerichtet ist, die durch die Funktionseinheit (101, 103, 123) bereitgestellte Gerätefunktion zu steuern.

2. Elektrisches Gerät (100) gemäß Anspruch 1, wobei
- die Sicherheits-Software des Sicherheits-Moduls (201) auf einem ersten Prozessor implementiert ist;
- die Funktions-Software des Funktions-Moduls (202) auf einem zweiten Prozessor implementiert ist; und
- der erste Prozessor und der zweite Prozessor voneinander getrennt sind.

3. Elektrisches Gerät (100) gemäß einem der vorhergehenden Ansprüche, wobei das Sicherheits-Modul (201) in Bezug auf die Bereitstellung der Gerätefunktion darauf beschränkt ist, eine Fehlfunktion der Funktionseinheit (101, 103, 123) zu detektieren, und zu veranlassen, dass daraufhin eine Energieversorgung der Funktionseinheit (101, 103, 123) über die Versorgungsleitung (107) unterbunden wird.

4. Elektrisches Gerät (100) gemäß einem der vorhergehenden Ansprüche, wobei die Funktionseinheit (101, 103, 123) eingerichtet ist, zur Bereitstellung der Gerätefunktion eine Menge an elektrischer Energie über die Versorgungsleitung (107) aufzunehmen, durch die, bei Vorliegen einer Fehlfunktion, die Funktionseinheit (101, 103, 123) zerstört werden kann.

5. Elektrisches Gerät (100) gemäß einem der vorhergehenden Ansprüche, wobei
- die Funktionseinheit (101, 103, 123) ein Steuerelement (123) umfasst, durch das ein Strom, der von der Versorgungsleitung (107) in die Funktionseinheit (101, 103, 123) fließt, in N unterschiedlichen Stufen, mit N>2, eingestellt werden kann; und
- das Funktions-Modul (202) eingerichtet ist, ein Steuersignal (143) zur Ansteuerung des Steuerelements (123) zu generieren.

6. Elektrisches Gerät (100) gemäß Anspruch 5, wobei das Funktions-Modul (202) eingerichtet ist, den Strom durch das Steuerelement (123) in Abhängigkeit von dem Sensorsignal (141) zu steuern.

7. Elektrisches Gerät (100) gemäß einem der Ansprüche 5 bis 6, wobei das Steuerelement (123) ein Halbleiter-Bauelement, insbesondere einen Triac, umfasst.

8. Elektrisches Gerät (100) gemäß einem der Ansprüche 5 bis 7, wobei
- das Funktions-Modul (202) eingerichtet ist, das Steuersignal (143) zur Ansteuerung des Steuerelements (123) dem Sicherheits-Modul (201) bereitzustellen; und
- das Sicherheits-Modul (202) eingerichtet ist, auch auf Basis von dem Steuersignal (143) zu detektieren, ob eine Fehlfunktion von der Funktionseinheit (101, 103, 123) vorliegt.

9. Elektrisches Gerät (100) gemäß einem der Ansprüche 5 bis 8, wobei
- das elektrische Gerät (100) Freigabe-Mittel umfasst, um eine Steuerung des Steuerelements (123) durch das Steuersignal (143) zu ermöglichen bzw. zu unterbinden;
- das Sicherheits-Modul (202) eingerichtet ist, die Freigabe-Mittel zu veranlassen, eine Steuerung des Steuerelements (123) durch das Steuersignal (143) zu unterbinden, wenn eine Fehlfunktion der Funktionseinheit (101, 103, 123) detektiert wurde.

10. Elektrisches Gerät (100) gemäß einem der Ansprüche 5 bis 9, wobei
- das elektrische Gerät (100) einen Stromsensor (126) umfasst, der eingerichtet ist, einen Indikator (145) für den Strom durch das Steuerelement (123) zu erfassen; und
- das Sicherheits-Modul (202) eingerichtet ist, eine Fehlfunktion der Funktionseinheit (101, 103, 123) auch auf Basis von dem Indikator (145) zu detektieren.

11. Elektrisches Gerät (100) gemäß einem der Ansprüche 5 bis 10, wobei der Sicherheits-Schalter (108) eingerichtet ist, den Strom, der von der Versorgungsleitung (107) über das Steuerelement (123) in die Funktionseinheit (101, 103, 123) fließt, galvanisch zu unterbrechen.

12. Elektrisches Gerät (100) gemäß Anspruch 11, wobei
- die Versorgungsleitung (107) eine Vielzahl von Teilleitungen für Phasen eines Dreiphasenwechselstroms umfasst;
- die Funktionseinheit (101, 103, 123) eine Vielzahl von Steuerelementen (123) für die Vielzahl von Teilleitungen umfasst; und
- der Sicherheits-Schalter (108) eingerichtet ist, die Vielzahl von Steuerelementen (123) von der Vielzahl von Teilleitungen galvanisch zu trennen.

13. Elektrisches Gerät (100) gemäß einem der vorhergehenden Ansprüche, wobei
- die Funktionseinheit (101, 103, 123) einen Heizwiderstand (103) umfasst;
- der Heizwiderstand (103) eingerichtet ist, elektrische Energie in thermische Energie zu wandeln, um ein Medium (102) zu erwärmen;
- die ein oder mehrere Sensoren (104, 105, 106) einen Temperatur-Sensor (105, 106) umfassen; und
- das Sensorsignal (141) Temperaturdaten von dem Temperatur-Sensor (105, 106) umfasst.

14. Elektrisches Gerät (100) gemäß Anspruch 13, wobei
- die Funktionseinheit (101, 103, 123) einen Kanal (101) zur Aufnahme eines flüssigen und/oder gasförmigen Mediums (102) umfasst;
- der Kanal (101) eingerichtet ist, das Medium (102) an dem Heizwiderstand (103) vorbeizuführen; und
- die ein oder mehrere Sensoren (104, 105, 106) einen Durchfluss-Sensor (104) umfassen, der eingerichtet ist, eine Menge des Mediums (102) zu erfassen, die an dem Heizwiderstand (103) vorbeigeführt wird; und
- das Sensorsignal (141) Mengendaten von dem Durchfluss-Sensor (104) umfasst.

15. Steuereinheit (111) für ein elektrisches Gerät (100), wobei
- das elektrische Gerät (100), eine Funktionseinheit (101, 103, 123) zur Bereitstellung einer Gerätefunktion des elektrischen Geräts (100) umfasst;
- die Funktionseinheit (101, 103, 123) zur Bereitstellung der Gerätefunktion elektrische Leistung über eine Versorgungsleitung (107) aufnimmt;
- das elektrische Gerät (100) ein oder mehrere Sensoren (104, 105, 106) umfasst, die eingerichtet sind, ein Sensorsignal (141) zur Überwachung der durch die Funktionseinheit (101, 103, 123) bereitgestellten Gerätefunktion zu erfassen;
- das elektrische Gerät (100) einen Sicherheits-Schalter (108) umfasst, der eingerichtet ist, die Funktionseinheit (101, 103, 123) von der Versorgungsleitung (107) zu trennen;
- die Steuereinheit (111) ein Sicherheits-Modul (201) mit Sicherheits-Software umfasst, das eingerichtet ist, auf Basis des Sensorsignals (141) eine Fehlfunktion der Funktionseinheit (101, 103, 123) zu detektieren, und daraufhin zu veranlassen, dass die Funktionseinheit (101, 103, 123) durch den Sicherheits-Schalter (108) von der Versorgungsleitung (107) getrennt wird; und
- die Steuereinheit (111) ein, von dem Sicherheits-Modul (141) getrenntes, Funktions-Modul (202) mit Funktions-Software umfasst, das eingerichtet ist, die durch die Funktionseinheit (101, 103, 123) bereitgestellte Gerätefunktion zu steuern.
